Europäisches Patentamt

European Patent Office

Office européen des brevets

(19)

(11) Numéro de publication : **0 294 296 B1**

(12) **FASCICULE DE BREVET EUROPEEN**

(45) Date de publication du fascicule du brevet :
09.10.91 Bulletin 91/41

(51) Int. Cl.⁵ : **F15B 13/042, F16K 27/04**

(21) Numéro de dépôt : 88401358.2

(22) Date de dépôt : 03.06.88

(54) Distributeur à tiroir compact.

(30) Priorité : 05.06.87 FR 8707900

(43) Date de publication de la demande :
07.12.88 Bulletin 88/49

(45) Mention de la délivrance du brevet :
09.10.91 Bulletin 91/41

(84) Etats contractants désignés :
AT BE CH DE ES GB GR IT LI LU NL SE

(56) Documents cités :
BE-A- 567 808
FR-A- 1 359 509
US-A- 3 415 282
US-A- 3 451 430
US-A- 4 355 658

(73) Titulaire : JOUCOMATIC S.A.
32, Avenue Albert-1er
F-92506 Rueil-Malmaison (FR)

(72) Inventeur : Besancon, Christian
3 rue de Bonn
F-28 Luce (FR)
Inventeur : Bogard, Michel
59 Sentier des Tribouillards
F-78 Montesson (FR)

Inventeur : Boniface, Jean-Claude
26 Résidence des Taratres
F-92 Rueil (FR)
Inventeur : Courtel, Gilles
3 rue de Genève
F-28 Luce (FR)
Inventeur : Goupil, Michel
1 rue Albert Brossard
F-28 Luce (FR)
Inventeur : Hermeline, Daniel
49 rue Rabuan de Coudray
F-28 Luce (FR)
Inventeur : Juhel, Bernard
128 rue Paul Vaillant Couturier
F-92 Nanterre (FR)
Inventeur : Patier, Jean-Claude
10 rue François Mattei
F-28 Luce (FR)
Inventeur : Valet, Thierry
38 rue Quetigny
F-93 Epinay S/Seine (FR)
Inventeur : Varret, Jean-Pierre
19, rue de la Mairie
F-28 Berchères Les Pierres (FR)

(74) Mandataire : Armengaud Ainé, Alain
Cabinet ARMENGAUD AINE 3 Avenue
Bugeaud
F-75116 Paris (FR)

EP 0 294 296 B1

Jouve, 18, rue Saint-Denis, 75001 PARIS

## Description

La présente invention est relative à un distributeur à tiroir compact.

On sait que les distributeurs à tiroir actuellement réalisés comportent un corps pourvu des voies d'admission et d'échappement du fluide à distribuer, au travers duquel se déplace le tiroir sous l'effet d'un organe de commande. Le corps du distributeur est ouvert à chaque extrémité de manière à délimiter de chaque côté des extrémités du tiroir des chambres obturées par des couvercles munis de moyens d'étanchéité, la chambre située à l'une des extrémités du distributeur contenant l'organe de commande du tiroir et la chambre située à l'autre extrémité contenant l'organe de rappel du tiroir.

US-A-3415282 fait connaître un distributeur à tiroir compact comportant un corps, un tiroir, une pluralité d'entretoises annulaires empilées et alignées les unes à la suite des autres, à l'extérieur dudit corps, le tiroir coulissant au travers de l'alésage axial desdites entretoises et chacune de celles-ci étant munie de joints d'étanchéité. L'empilage des entretoises est maintenu dans le corps à l'aide d'une bague pourvue de moyens de blocage sur le corps. Il est prévu un couvercle unique, situé sur le côté du corps recevant l'organe de commande du tiroir et les moyens de rappel dudit organe de commande. L'organe de commande est constitué par un diaphragme. Un disque est fixé à l'extrémité du tiroir et contre les deux faces de ce disque prennent appui respectivement un ressort de compression et le diaphragme.

La présente invention se propose d'apporter des perfectionnements à ce type de distributeur à tiroir permettant d'en simplifier la réalisation, d'en diminuer l'encombrement, d'en diminuer les coûts de fabrication et d'en améliorer la fiabilité.

En conséquence, cette invention concerne un distributeur à tiroir compact du type décrit dans US-A-3415282, caractérisé en ce que l'organe de commande est constitué par un piston, qui est attelé au tiroir par un système d'encliquetage, ce piston comportant à cet effet une rainure en T dans laquelle vient se loger un tenon de forme correspondante solidaire de l'extrémité du tiroir faisant face à ladite rainure.

D'autres caractéristiques et avantages de la présente invention ressortiront de la description faite ci-après en référence aux dessins annexés sur lesquels :

La figure 1 est une vue en coupe axiale longitudinale d'un mode de réalisation préféré d'un distributeur selon cette invention et

La figure 2 est une coupe selon 2-2 de la figure 1.

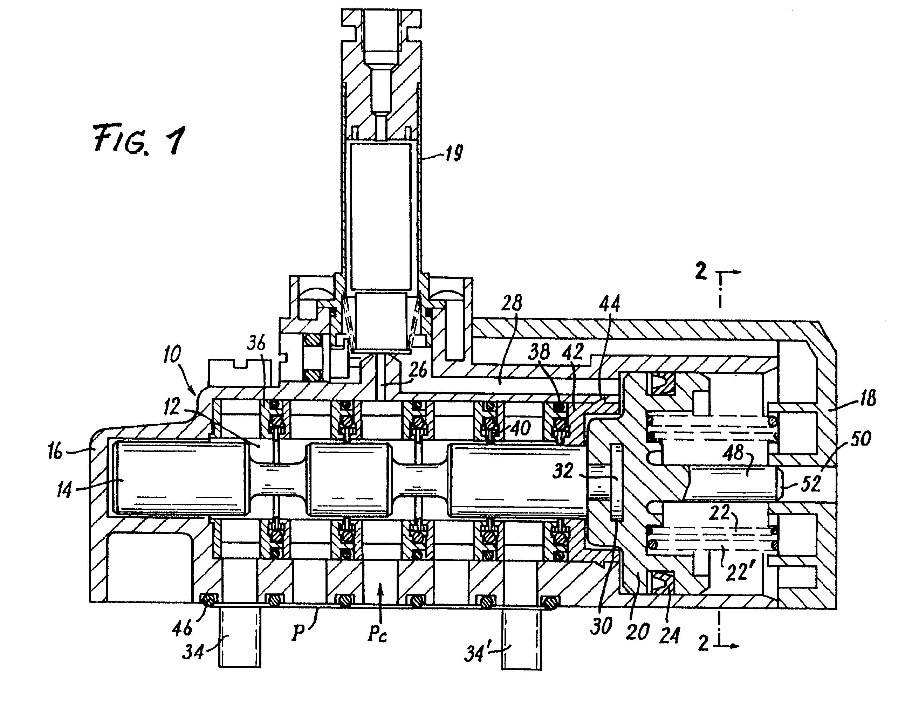

En se référant à la figure 1, on voit que le distributeur à tiroir compact objet de la présente invention se présente sous la forme d'un corps 10 comportant un alésage axial 12 dans lequel peut coulisser le tiroir 14 sous l'action d'un organe de commande qui sera décrit ci-après. Selon un exemple de réalisation préféré de l'invention, le tiroir (14) est réalisé, soit en alliage d'aluminium, soit en matière plastique. Ce distributeur compact comporte à sa partie inférieure une partie plane horizontale P qui en constitue le plan de pose, le distributeur étant monté sur l'organe à commander par l'intermédiaire de vis de fixation 34, 34'. Ce distributeur comporte de manière tout à fait classique des voies d'admission et d'échappement pour le fluide à distribuer.

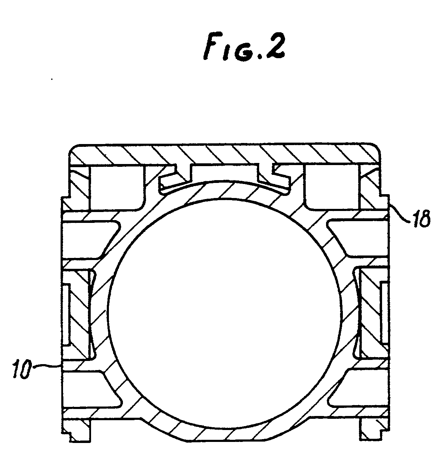

Comme on peut le voir sur le dessin, le corps du distributeur ne comporte qu'une extrémité ouverte obturée par un couvercle unique 18 maintenu sur le corps 10 par un système d'encliquetage (voir la figure 2), l'autre extrémité 16 faisant partie intégrante du corps 10.

Dans la chambre qui est située entre le couvercle unique 18 et l'extrémité du tiroir 14, on dispose selon la présente invention l'organe de commande du tiroir et ses moyens de rappel. Selon un exemple de réalisation préféré de cette invention, l'organe de commande est constitué par un piston 20 pourvu de joints d'étanchéité 24 qui est attelé à l'extrémité du tiroir 14. La solidarisation du piston 20 sur l'extrémité du tiroir 14 est réalisée ici par un encliquetage, le piston 20 comportant à cet effet une rainure en forme de T 30 dans laquelle vient s'engager un tenon 32 prévu à l'extrémité du tiroir de distribution 14. Les moyens de rappel du piston de commande 20 sont constitués ici par deux ressorts concentriques 22, 22' travaillant en compression, interposés entre le couvercle unique 18 et le fond du piston de commande 20.

Dans cet exemple de réalisation non limitatif, le distributeur selon l'invention est à commande pneumatique et rappel par ressort. On peut bien entendu, sans sortir du cadre de l'invention, envisager d'autres systèmes de commande et de rappel du type généralement utilisé sur les distributeurs à tiroir.

En conséquence, dans cet exemple de réalisation, l'admission de la pression de commande s'effectue par la voie Pc et sous la dépendance d'une électrovanne de commande 19, cette pression de commande venant agir sur le piston 20 par passage au travers de l'ajutage 26 et du passage 28 ménagés dans le corps 10 du distributeur. Le piston de commande 20 comporte une tige 48 pouvant coulisser au travers d'un alésage 50 prévu dans le couvercle unique 18 de telle manière que son extrémité 52 puisse faire saillie en dehors de ce couvercle 18 de manière à constituer un indicateur de position du piston de commande 20.

Dans cet exemple de réalisation préféré du distributeur à tiroir compact selon la présente invention, le tiroir de distribution 14 coulisse au travers d'un empilage d'entretoises identiques 36 alignées dans le corps 10 du distributeur. Ces entretoises sont réalisées en matière plastique et elles contiennent les joints 38 et 40 assurant respectivement l'étanchéité sur le corps du distributeur et sur le tiroir 14 de ce distributeur. Comme on le voit sur la figure, ce tiroir 14 coulisse au travers de l'alésage obtenu par l'empilage et l'alignement des entretoises. Cet empilage des entretoises est maintenu dans le corps du distributeur à l'aide d'une bague 42, de préférence en laiton munie de moyens de blocage sur le corps du distributeur de manière que l'ensemble des entretoises logées dans le corps du distributeur soit rendu indémontable. Dans cet exemple de réalisation non limitatif, la bague 42 est maintenue sur le corps 10 par un système d'encliquetage 44.

Lors de la réalisation du distributeur selon l'invention, il suffit d'empiler les entretoises successives 36 à l'intérieur de l'alésage du corps 10 (ces entretoises étant pourvues d'un pion de centrage et d'un logement correspondant de manière à en permettre l'auto-alignement et le centrage les unes par rapport aux autres) puis d'introduire l'ensemble tiroir de distribution 14, piston de commande 20 et ressort de rappel 22, 22' avant d'obturer l'extrémité ouverte du corps du distributeur par le couvercle unique 18 qui vient s'encliqueter sur le corps de ce distributeur. On comprend de la description qui précède que ce montage est particulièrement facile à réaliser. Par ailleurs, le distributeur comporte un nombre réduit de pièces par rapport au distributeur classique et notamment il ne comporte plus qu'un seul couvercle ce qui réduit le nombre de joints d'étanchéité et bien entendu améliore la fiabilité.

En ce qui concerne le fonctionnement propre du distributeur selon la présente invention, il est absolument identique à celui des distributeurs classiques comportant les organes de commande et de rappel séparés à chaque extrémité du tiroir. Par conséquent, on ne décrira pas ce fonctionnement.

## Revendications

1. Distributeur à tiroir compact comportant un corps (10), un tiroir (14), une pluralité d'entretoises annulaires (36) empilées et alignées les unes à la suite des autres, à l'intérieur dudit corps (10), le tiroir (14) coulissant au travers de l'alésage axial desdites entretoise (36), chacune de celles-ci étant munie de joints d'étanchéité (38, 40), l'empilage des entretoises étant maintenu dans le corps (10) à l'aide d'une bague (42) pourvue de moyens de blocage (44) sur le corps, et un couvercle unique (18) étant prévu, qui est situé sur le côté du corps (10) recevant l'organe de commande (20) du tiroir et les moyens de rappel de cet organe de commande, caractérisé en ce que l'organe de commande du tiroir est constitué par un piston (20), qui est attelé au tiroir (14) par un système d'encliquetage, ce piston comportant à cet effet une rainure en T (30) dans laquelle vient se loger un tenon (32) de forme correspondante, solidaire de l'extrémité du tiroir (14) faisant face à ladite rainure (30).

2. Distributeur à tiroir compact selon la revendication 1, caractérisé en ce que lesdites entretoises (36) sont réalisées en matière plastique et ladite bague de maintien (42) est réalisée en laiton, son blocage sur le corps (10) du distributeur s'effectuant par un système d'encliquetage (44).

3. Distributeur à tiroir compact selon l'une des revendications 1 ou 2, caractérisé en ce que ledit piston de commande (20) muni de joints d'étanchéité (24) est logé dans une capacité étanche, obturée par ledit couvercle unique (18), ce piston étant de préférence à commande pneumatique.

4. Distributeur à tiroir compact selon l'une quelconque des revendications précédentes, caractérisé en ce que les moyens de rappel (22, 22') du piston de commande (20) sont constitués par au moins un ressort logé dans la capacité étanche prévue entre ledit piston (20) et ledit couvercle (18).

5. Distributeurs à tiroir compact selon la revendication 4, caractérisé en ce que le piston de commande (20) est rappelé par deux ressorts conccentriques (22, 22').

6. Distributeur à tiroir compact selon l'une quelconque des revendications précédentes, caractérisé en ce que le couvercle unique (18) est maintenu par encliquetage sur le corps (10).

7. Distributeur à tiroir compact selon l'une quelconque des revendications précédentes, caractérisé en ce que le piston de commande (20) est muni d'une tige (48) dont l'extrémité (52) fait saillie en dehors d'un alésage axial (50) prévu dans le couvercle unique (18) de manière à constituer un indicateur de la position de ce piston de commande.

8. Distributeur à tiroir compact selon l'une quelconque des revendications précédentes, caractérisé en ce que le tiroir (14) est réalisé en alliage d'aluminium ou en matière plastique.

## Patentansprüche

1. Kompaktes Schieberventil mit einem Körper (10), einem Schieber (14), einer Anzahl von ringförmigen Zwischenstücken (36), die im Innern des Körpers (10) in Ausrichtung hintereinander angeordnet sind, wobei sich der Schieber (14) quer durch die Axialbohrung der Zwischenstücke (36) verschieben läßt, von denen jedes mit Dichtringen (38, 40) versehen ist, und die Anordnung der Zwischenstücke in dem Körper (10) mit Hilfe eines mit einer Arretiereinrichtung (44) versehenen Rings (42) an dem Körper aufrechterhalten wird, und wobei eine einzige Verschlußkappe (18) vorgesehen ist, die auf der Seite des Körpers (10) angeordnet ist, auf der das Steuerelement (20) für den Schieber und die Rükstellelemente für das Steuerelement untergebacht sind, **dadurch gekennzeichnet, daß** das Steuerelement für den Schieber von einem Kolben (20) gebildet wird, der durch ein Rastsystem mit dem Schieber (14) verbunden ist, wobei der Kolben zu diesem Zweck eine T-förmige Nut (30) aufweist, in die ein entsprechend geformter Zapfen (32) eingreift, der mit dem der Nut (30) zugewandten Ende des Schiebers (14) verbunden ist.

2. Kompaktes Schieberventil nach Anspruch 1, **dadurch gekennzeichnet, daß** die Zwischenstücke (36) aus Kunststoff und der Haltering (42) aus Messing ausgebildet ist, und daß die Arretierung des Ventilkörpers (10) durch ein System von Rastelementen (44) bewirkt wird.

3. Kompaktes Schieberventil nach einem der Ansprüche 1 oder 2, **dadurch gekennzeichnet, daß** der mit Dichtringen (24) versehene Steuerkolben (20) in einem abgedichteten Raum angeordnet ist, der durch das einzelne Abschlußelement (18) verschlossen ist, wobei der Kolben vorzugsweise pneumatisch gesteuert wird.

4. Kompaktes Schieberventil nach einem der vorhergehenden Ansprüche, **dadurch gekennzeichnet, daß** die Rückstellvorrichtungen (22, 22') des Steuerkolbens (20) durch wenigstens eine Feder gebildet sind, die in dem dichten Raum angeordnet ist, der zwischen dem Kolben (20) und dem Verschluß (18) vorgesehen ist.

5. Kompaktes Schieberventil nach Anspruch 4, **dadurch gekennzeichnet, daß** der Steuerkolben (20) durch zwei konzentrische Federn (22, 22') zurückgestellt wird.

6. Kompaktes Schieberventil nach einem der vorhergehenden Ansprüche, **dadurch gekennzeichnet, daß** die einzige Verschlußkappe (18) durch Verrastung an dem Körper (10) gehalten wird.

7. Kompaktes Schieberventil nach einem der vorhergehenden Ansprüche, **dadurch gekennzeichnet, daß** der Steuerkolben (20) einen Schaft (48) aufweist, dessen Ende (52) außerhalb von einer Axialbohrung (50) hervorsteht, die in der einzigen Verschlußklappe (18) derart vorgesehen ist, um eine Anzeige für die Stellung des Steuerkolbens zu bilden.

8. Kompaktes Schieberventil nach einem der vorhergehenden Ansprüche, **dadurch gekennzeichnet, daß** der Schieber (14) aus einer Aluminiumlegierung oder aus Kunststoff hergestellt ist.

## Claims

1. Compact slide valve comprising a body (10), a slider (14), a plurality of annular cross-members (36), stacked and aligned one after another inside said body (10), the slider (14) sliding through the axial bore of said cross-members (36), each of the latter being equipped with sealing rings (38, 40), the stack of cross-members being held in the body (10) by means of a ring (42) provided with means (44) for blocking it onto the body, and a single cover (18) being provided, which is situated at the side of the body (10) receiving the actuating member (20) for the slider and the restoring means for this actuating member, characterized in that the actuating member for the slider is composed of a piston (20), which is coupled to the slider (14) by a snap engagement system, this piston comprising, for this purpose, a T-shaped slot (30) into which a lug (32) of corresponding shape engages, this lug being integral with the end of the slider (14) facing said slot (30).

2. Compact slide valve according to Claim 1, characterized in that said cross-members (36) are made of a plastics material and said retaining ring (42) is made of brass, its blocking onto the body (10) of the valve being effected by means of a snap engagement system (44).

3. Compact slide valve according to one of Claims 1 or 2, characterized in that said actuating piston (20) equipped with sealing rings (24) is housed in a sealed chamber, obturated by said single cover (18), this piston being preferably pneumatically operated.

4. Compact slide valve according to any one of the preceding Claims, characterized in that the restoring means (22, 22') for the actuating piston (20) are constituted of at least one spring housed in the sealed chamber provided between said piston (20) and said cover (18).

5. Compact slide valve according to Claim 4, characterized in that the actuating piston (20) is restored by two concentric springs (22, 22').

6. Compact slide valve according to any one of the preceding Claims, characterized in that the single cover (18) is held on the body (10) by snap engagement.

7. Compact slide valve according to any one of the preceding Claims, characterized in that the actuating piston (20) is provided with a rod (48), the end (52) of which projects outside an axial bore (50) provided in the single cover (18) in such a way as to constitute an indicator of the position of this actuating piston.

8. Compact slide valve according to any one of the preceding Claims, characterized in that the slider (14) is made of aluminium alloy or of plastics material.

FIG. 1

EP 0 294 296 B1

# FIG.2